# EUROPEAN PATENT SPECIFICATION

(11) **EP 4 166 610 B1**
(45) Date of publication and mention of the grant of the patent: **30.04.2025**
(21) Application number: 21869031.1
(22) Date of filing: 21.07.2021
(51) Int. Cl.: C08L 23/06, C08L 23/26, C08L 27/18, C08L 81/02, C08L 81/06, C08L 71/12, C08L 79/08, C08K 3/26, C08K 3/30, C08K 3/32, B32B 15/08, F16C 33/20

(54) **RESIN COMPOSITION FOR SLIDING MEMBER, AND SLIDING MEMBER**
HARZZUSAMMENSETZUNG FÜR GLEITELEMENT SOWIE GLEITELEMENT
COMPOSITION DE RÉSINE POUR ÉLÉMENT COULISSANT ET ÉLÉMENT COULISSANT

(30) Priority: 16.09.2020 JP 2020155728
(43) Date of publication of application: 19.04.2023
(73) Proprietor: Oiles Corporation, Kanagawa 252-0811 (JP)
(72) Inventor: TAKAHASHI, Kohei, Fujisawa-shi, Kanagawa 252-0811 (JP)
(74) Representative: Torggler & Hofmann Patentanwälte - Rankweil
(86) International application number: PCT/JP2021/027325
(87) International publication number: WO 2022/059344

(56) References cited:
- WO-A1-2019/009234
- WO-A1-2020/059651
- CN-A- 109 370 222
- JP-A- 2000 169 738
- JP-A- 2000 198 925
- JP-A- 2005 042 107
- JP-A- 2007 119 638
- JP-A- 2007 197 717
- JP-A- 2015 124 311
- JP-A- 2019 218 568
- JP-A- H0 931 328
- US-A- 5 990 225

## Description

### Technical Field

The present invention relates to a resin composition for sliding member, and a sliding member.

### Background Art

Polyphenylene sulfide resins have been used as a sliding member of OA apparatuses, household electric appliances, and the like because of having excellent heat resistance, chemical resistance, moldability, and the like. In addition, they are expected to be used as a sliding member for food machinery to be subjected to heat sterilization treatment or sterilization treatment with hypochlorous acid. In general, polyphenylene sulfide resins themselves are inferior in toughness with low elongation and have insufficient self-lubrication properties so that they are generally used as a sliding member after being reinforced with an inorganic fiber such as glass fiber and mixed with a solid lubricating oil. For example, Patent Literature 1 proposes a bearing body formed from a composition obtained by, compounding a polyphenylene sulfide resin, a glass fiber or a carbon fiber, and a polytetrafluoroethylene resin. The sliding member obtained by adding a reinforcing filler such as glass fiber or carbon fiber however has such a drawback that it may damage a counterpart, if it is made of a stainless steel or a soft metal such as aluminum alloy, during sliding with the counterpart and the damage may grow into abrasive wear.

For overcoming such a drawback of damaging this counterpart in sliding, Patent Literature 2 proposes a sliding member composed of a resin composition obtained by adding, to a polyphenylene sulfide resin, a reinforcing filler such as glass fiber or carbon fiber and a polytetrafluoroethylene resin and also a phosphate. Although the resulting sliding member is obtained by making use of the lubricating-film forming property of the phosphate on the counterpart to prevent the reinforcing filler from damaging the counterpart and improve lubrication properties, it has a problem of insufficiency in both the wear resistance and lubrication properties under severe using conditions such as high load.

Patent Literature 3 proposes a sliding member with wear resistance and lubrication properties obtained by adding an unsintered high molecular weight polytetrafluoroethylene resin without using the aforesaid reinforcing filler such as glass fiber or carbon fiber and kneading the high molecular weight polytetrafluoroethylene resin to make it fibrous and orientate it to obtain a molded product having improved mechanical strength. Compounding of a large amount of the high molecular weight polytetrafluoroethylene resin is however required to obtain a sliding material with sufficient toughness, wear resistance, and lubrication properties. In this case, the high molecular weight polytetrafluoroethylene resin which has been made fibrous easily aggregates and the resulting aggregate may cause a problem such as defective appearance of a molded product or surface roughening at the time of mechanical processing. Further, the polyphenylene sulfide resin is inferior in toughness as described above and is therefore brittle so that it has a problem that abnormal wear may occur when a counterpart in sliding has high surface roughness.

Patent Literature 4 discloses a slidable resin composition comprising polyphenylene sulfide, polytetrafluoroethylene, modified polyethylene, graphite and a silane coupling agent.

### Citation List

### Patent Literatures

Patent Literature 1: Japanese Patent Application Laid-Open No. S55-227
Patent Literature 2: Japanese Patent No. 2954638
Patent Literature 3: Japanese Patent No. 2790692
Patent Literature 4: US 5990225 A

### Summary of Invention

### Technical Problem

The present invention has been made in consideration of the aforesaid various points and an object is to provide a resin composition for sliding member which is excellent in molding processability and mechanical processability and at the same time, capable of improving sliding properties including lubrication properties and wear resistance, and mechanical properties, and a sliding member.

### Solution to Problem

The resin composition for sliding member according to the present invention contains 40 to 80 mass% of a polyphenylene sulfide resin and, as additives, 15 to 40 mass% of a polytetrafluoroethylene resin, 2 to 20 mass% of an ultra-high molecular weight polyethylene resin, 0.1 to 5 mass% of a modified polyolefin resin, and 0.5 to 5 mass% of an amorphous polymer.

The resin composition for sliding member according to the present invention may contain, as an additional component, 0.1 to 10 mass% of at least one selected from phosphates, carbonates, and sulfates.

### Effects of Invention

According to the present invention, a resin composition for sliding member capable of improving sliding properties including lubrication properties and wear resistance, and a sliding member can be provided.

### Description of Embodiments

The details of the present invention will hereinafter be described.

The resin composition for sliding member according to the present invention contains 40 to 80 mass% of a polyphenylene sulfide resin and, as an additive, 15 to 40 mass% of a polytetrafluoroethylene resin, 2 to 20 mass% of an ultra-high molecular weight polyethylene resin, 0.1 to 5 mass% of a modified polyolefin resin, and 0.5 to 5 mass% of an amorphous polymer.

The polyphenylene sulfide resin constitutes a matrix of the resin composition for sliding member according to the present invention and is a crosslinked type, a linear type, or a semi-linear type, depending on a difference in molecular structure. Although no particular limitation is imposed in the present invention, a semi-linear type is preferred from the standpoint of suppressing insufficient filling of a mold with the resin due to an out gas or defective molding such as carbonization or discoloration. Examples of the crosslinked type include "T4 (trade name)", product of DIC Corporation; those of the linear type include "W-214 (trade name)", product of Polyplastics Co., Ltd.; and those of the semi-linear type include "ECOTRAN N-200 (trade name)", product of Teijin Limited.

The content of the polyphenylene sulfide resin is required to be 40 to 80 mass%, preferably 49 to 69 mass%. At this content, excellent heat resistance, chemical resistance, moldability, and the like which the polyphenylene sulfide resin originally has can be maintained.

The polytetrafluoroethylene resin to be compounded with the resin composition for sliding member according to the present invention imparts lubrication properties to a sliding member obtained by molding the resin composition for sliding member and contributes to low friction. The resin is added in an amount of 15 to 40 mass%, preferably 20 to 35 mass%. When the amount of the resin is less than 15 mass%, sufficiently low friction is not achieved and when the amount is more than 40 mass%, the aggregation of the polytetrafluoroethylene resin may cause a defective appearance.

The polytetrafluoroethylene resin includes a high molecular weight polytetrafluoroethylene resin mainly used for molding and a low molecular weight polytetrafluoroethylene resin mainly used for lubrication properties. In the present invention, either one of the high molecular weight polytetrafluoroethylene resin or the low molecular weight polytetrafluoroethylene resin is usable, but mixing of the high molecular weight polytetrafluoroethylene resin and the low molecular weight polytetrafluoroethylene resin at an appropriate ratio is preferred.

The high molecular weight polytetrafluoroethylene resin usually has several million to ten million molecular weight and is used mainly for molding as a molding powder of fine powder. Examples of it include "POLYFLON M-12 (trade name)" and "POLYFLON M-112 (trade name)", each product of Daikin Industries, Ltd. A powder obtained by molding and sintering the high molecular weight polytetrafluoroethylene resin, followed by pulverization is also usable, though it is not a molding powder or fine powder. Examples of it include "KT300M (trade name)", product of Kitamura Limited.

The high molecular weight polytetrafluoroethylene resin is useful for imparting lubrication properties but mainly, the resin, which has been melt kneaded into a fiber, contributes to the toughness of a sliding member obtained by molding the resulting resin composition for sliding member and thereby provides the sliding member having improved mechanical strength. The amount of the resin is 1 to 10 mass%, preferably 1 to 5 mass%. Amounts less than 1 mass% have a poor effect of improving the mechanical strength and amounts more than 10 mass% may damage the moldability of a resin composition for sliding member or the appearance of a molded product (sliding member) due to aggregation or excessive thickening.

The low molecular weight polytetrafluoroethylene resin mainly plays a role of imparting lubrication properties. Examples of it include "DYNEON TF (trade name)", product of 3M Company, "Lublon L-5 (trade name)", product of Daikin Industries, Ltd., and "Fluon L169J (trade name)", product of AGC Chemicals. The amount of it is 10 to 35 mass%, preferably 15 to 30 mass%. When the amount is less than 10 mass%, the resulting resin composition cannot sufficiently satisfy lubrication properties and when the amount is. more than 35 mass%, it may be the cause of the deteriorated moldability of the resin composition for sliding member or the reduced mechanical strength of a molded product (sliding member).

As the ultra-high molecular weight polyethylene resin, that having an intrinsic viscosity [η] of 10 dl/g or more as measured in a decalin acid solvent at 135°C and having a viscosity-average molecular weight of 500000 to 6000000 can be compounded with the resin composition for sliding member according to the present invention. Examples of it include "MIPELON (trade name)", product of Mitsui Chemicals, Inc. As the ultra-high molecular. weight polyethylene resin, that composed of an ultra-high molecular weight polyethylene resin having an intrinsic viscosity of 10 to 40 dl/g at 135°C and a low molecular weight or high molecular weight polyethylene resin having an intrinsic viscosity of 0.1 to 5 dl/g as measured under the same condition can also be used. Examples of it include "LUBMER (trade name)", product of Mitsui Chemicals, Inc. Further, an acid-modified ultra-high molecular weight polyethylene resin can also be used and examples of it include "Modified LUBMER (trade name)", product of Mitsui Chemicals, Inc., which is a maleic anhydride-modified resin.

The ultra-high molecular weight polyethylene resin compounded with the resin composition for sliding member is effective for improving the sliding properties under a light load and in a medium to high speed region. In general, when only the polytetrafluoroethylene resin is used, it is difficult to improve the sliding properties under the aforesaid conditions. The amount of the ultra-high molecular weight polyethylene resin is 2 to 20 mass%, preferably 2 to 10 mass%. Amounts of the ultra-high molecular weight polyethylene resin less than 2 mass% may have poor effects for improving the aforesaid sliding properties and amounts more than 20 mass% may worsen the wear resistance or moldability because of an increase in the dispersion ratio of it in the polyphenylene sulfide resin.

As the modified polyolefin resin to be compounded with the resin composition for sliding member according to the present invention, ethylene-based ionomers, polyolefin resins having in the molecule thereof an epoxy group, and polyolefin resins graft-modified with an unsaturated carboxylic acid or an anhydride thereof, or a derivative thereof are usable.

The ethylene-based ionomer is an ionic copolymer obtained by adding a metal ion having a valence of 1 to 3 to a copolymer between an ethylene-containing α-olefin and an α,β-unsaturated carboxylic acid and it has an intermolecular crosslinked structure with the metal ion. Here, examples of the α,β-unsaturated carboxylic acid include acrylic acid, methacrylic acid, and itaconic acid. Typical examples of the metal ion having a valence of 1 to 3 include Na⁺, K⁺, Ca²⁺, Zn²⁺, and Al³⁺. Examples include "HIMILAN (trade name)", product of DOW-MITSUI POLYCHEMICALS Co., Ltd., obtained by intermolecular crosslinking of an ethylene-methacrylic acid copolymer with Na⁺ or Zn²⁺.

Specific examples of the polyolefin resin having, in the molecule thereof, an epoxy group include an ethylene-glycidyl methacrylate copolymer,"BONDFAST (trade name)", product of Sumitomo Chemical Co., Ltd., obtained by copolymerizing the aforesaid copolymer with vinyl acetate or methyl acrylate as a third component and "MODIPER A4000 series (trade name)", product of NOF Corporation, obtained by grafting polystyrene, polymethyl methacrylate or acrylonitrile-styrene copolymer on an ethylene-glycidyl methacrylate copolymer.

Examples of a polyolefin resin serving as the main chain of the polyolefin resin graft-modified with an unsaturated carboxylic acid or an anhydride thereof, or a derivative thereof include α-olefin homopolymers, copolymers of two or more α-olefins, and copolymers between an α-olefin and another compound copolymerizable with the α-olefin. Examples of the α-olefin include α-olefins having 2 to 20 carbons such as ethylene, propylene, 1-butene, 1-hexene, 4-methyl-1-pentene, 1-octene, 1-decene, 1-dodecene, 1-tetradecene, 1-hexadecene, 1-octadecene, and 1-eicosene. Examples of the another compound include compounds having many unsaturated bonds such as conjugated dienes and non-conjugated dienes, vinyl acetate, and acrylic acid esters. Specific examples of the preferable polyolefin resin include low-density, medium-density, or high-density polyethylene, linear low-density polyethylene, polypropylene, and α-olefin copolymers (such as ethylene-propylene copolymer, ethylene-vinyl acetate copolymer, ethylene-butene copolymer, and ethylene-hexene copolymer).

The unsaturated carboxylic acid or anhydride thereof, or derivative thereof is a compound having, in one molecule thereof, an ethylenically unsaturated bond and a carboxyl group, an acid anhydride or a derivative group. Specific examples of the unsaturated carboxylic acid include unsaturated carboxylic acids such as acrylic acid, methacrylic acid, α-ethylacrylic acid, maleic acid, fumaric acid, tetrahydrophthalic acid, methyltetrahydrophthalic acid, itaconic acid, citraconic acid, crotonic acid, isocrotonic acid, endocis-bicyclo[2.2.1]hepto-2,3-dicarboxylic acid (nadic acid), and methyl-endocis-bicyclo[2.2.1]hepto-5-en-2,3-dicarboxylic acid (methylnadic acid); anhydrides of these unsaturated carboxylic acids; and derivatives such as unsaturated carboxylic acid halides, unsaturated carboxylic acid amides, and unsaturated carboxylic acid imides. More specific examples include malenyl chloride, maleimide, N-phenylmaleimide, maleic anhydride, itaconic anhydride, citraconic anhydride, monomethyl maleate, dimethyl maleate, and glycidyl maleate. Of these, acrylic acid, methacrylic acid, maleic acid, maleic anhydride, and itaconic anhydride are preferred, with maleic anhydride being particularly preferred.

Examples of the polyolefin resin modified with maleic anhydride include polyethylene resins modified with maleic anhydride, polypropylene resins modified with maleic anhydride, α-olefin copolymers modified with maleic anhydride, and styrene-ethylene/butylene-styrene copolymers (SEBSs) modified with maleic anhydride. Specific examples of the polyethylene resins modified with maleic anhydride and polypropylene resins modified with maleic anhydride include "ADMER (trade name)", product of Mitsui Chemicals, Inc. and "MODIC (trade name)", product of Mitsubishi Chemical Corporation; those of the α-olefin copolymers modified with maleic anhydride include "TAFMER (trade name)", product of Mitsui Chemicals, Inc.; and those of the styrene-ethylene/butylene-styrene copolymers modified with maleic anhydride include "Tuftec (trade name)", product of Asahi Kasei Corporation.

A molded product (sliding member) obtained using a resin composition for sliding member containing the modified polyolefin resin is improved in mechanical properties such as impact resistance and elongation. The amount of the modified polyolefin resin is 0.1 to 5 mass%, preferably 0.5 to 3 mass%. Amounts of the modified polyolefin resin less than 0.1 mass% may prevent the molded product from sufficiently exhibiting improvement in the aforesaid mechanical properties and amounts more than 5 mass% may impair the heat resistance or chemical resistance peculiar to the polyphenylene sulfide resin.

In the present invention, as the amorphous polymer, a polysulfone-based resin, a polyetherimide resin, or a polyphenylene ether resin is used. The polysulfone-based resin is a polymer containing, in the component molecule thereof, a sulfonyl group (-SO₂-) and examples include polyethersulfone resins represented by the following formula (1), polysulfone resins represented by the following formula (2), and the polyphenylsulfone resins represented by the following formula (3). Specific examples of the polyethersulfone resins include "SUMIKAEXCEL (trade name)", product of Sumitomo Chemical Co., Ltd., "Mitsui PES (trade name)", product of Mitsui Chemicals, Inc., "VERADEL (trade name)", product of Solvay, and "ULTRASON E series (trade name)", product of BASF SE; those of the polysulfone resins include "UDEL (trade name)", product of Solvay and "ULTRASON S series (trade name)", product of BASF SE; and those of the polyphenylsulfone resins include "RADEL (trade name)", product of Solvay, "ULTRASON P Series (trade name)", product of BASF SE, and "CERAMER 60 (trade name)", product of CERAMER GMBH.

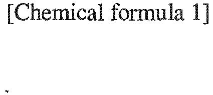

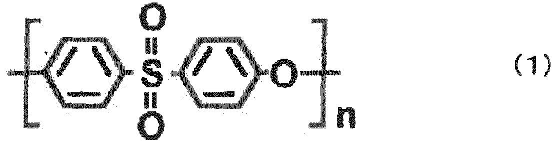

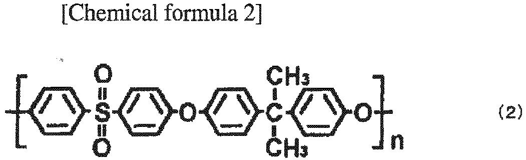

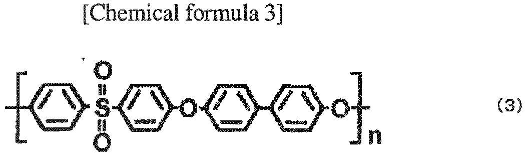

Examples of the polyetherimide resin include "ULTEM (trade name)", product of SABIC and those of the polyphenylene ether resin include "ZYLON (trade name)", product of Asahi Kasei Corporation, "Iupiace (trade name)", product of Mitsubishi Engineering-Plastics Corporation, and "NORYL (trade name)", product of SABIC.

The amorphous polymer, when compounded with the resin composition for sliding member, serves to improve the moldability of the resin composition for sliding member and at the same time, improve the toughness and wear resistance of a molded product (sliding member) obtained using the resin composition. The amount is 0.5 to 5 mass%, preferably 1 to 3 mass%. Amounts less than 0.5 mass% may prevent it from sufficiently exhibiting the aforesaid effects and amounts more than 5 mass% may worsen the moldability.

In the present invention, at least one selected from phosphates, carbonates, and sulfates may be compounded as an additional component.

The phosphates, carbonates, and sulfates themselves are not materials exhibiting such lubrication properties as those of a solid lubricants such as graphite or molybdenum disulfide, but when compounded with the resin composition for sliding member, they exhibit, in sliding with a counterpart, an effect of accelerating the forming property of a lubrication film such as a polytetrafluoroethylene resin on the surface (sliding surface) of the counterpart and thereby improving the sliding properties of the sliding member.

The phosphates, carbonates, and sulfates are preferably salts of an alkali metal or an alkaline earth metal. Examples of the phosphates include trilithium phosphate, tricalciumphosphate, dibasic calcium phosphate, dibasic magnesium phosphate, lithium pyrophosphate, calcium pyrophosphate, magnesium pyrophosphate, lithium metaphosphate, calcium metaphosphate, and magnesium metaphosphate; those of the carbonates include calcium carbonate, magnesium carbonate, barium carbonate, and strontium carbonate; and those of sulfates include calcium sulfate and barium sulfate.

The amount of the phosphate, carbonate, or sulfate is 0.1 to 10 mass%, preferably 1 to 5 mass%. Amounts of the phosphate less than 0.1 mass% may prevent it from sufficiently exhibiting the aforesaid effect of accelerating the forming property of a lubrication film, while amounts more than 10 mass% may rather deteriorate the wear resistance because the amount of the lubrication film formed on the surface of a counterpart is too large.

The resin composition for sliding member according to the present invention is essentially composed of the aforesaid composition and in the present invention, it may further contain, in addition to the aforesaid components, another additional component without significantly impairing the effects of the present invention. For example, it may contain non-fibrous inorganic fillers, lubricating oils such as mineral oil, ester oil, and silicone oil, waxes, and pigments such as carbon black. Examples of the non-fibrous inorganic fillers include talc, clay, mica, kaolin, sericite, bentonite, silicates such as alumina silicate, and metal oxides such as silicon oxide (silica), magnesium oxide, titanium oxide, and iron oxide. Such non-fibrous inorganic fillers may be pretreated with a silane-based or titanate-based coupling agent and thereby have enhanced adhesion with a matrix resin.

The resin composition for sliding member according to the present invention may be prepared by weighing respective components so that their amounts in the composition fall within the aforesaid range, charging them in a conventional kneader such as single-screw extruder, twin-screw extruder, Banbury mixer, roll, Brabender, or kneader, and melt kneading the resulting mixture.

Usually, the aforesaid necessary components and, if necessary, an additional component and a crosslinking catalyst are kneaded by an extruder or the like into pellets and the resulting pellets are provided for processing. These components may also be supplied directly to a molding machine and molded by the molding machine while being kneaded therein into a composition. It is also possible to knead a component B or a component C in advance to have a highly concentrated masterbatch and, while diluting it with other components such as a component A, blend and compound or directly mold the resulting mixture.

### Examples

In the following various Examples, the materials shown below were used as the polyphenylene sulfide resin, high molecular weight polytetrafluoroethylene resin, low molecular weight polytetrafluoroethylene resin, ultra-high molecular weight polyethylene resin, modified polyolefin resin, amorphous polymer, phosphate, sulfate, lubricant, and pigment. The following materials are all indicated by a trade name.
[A] Polyphenylene sulfide resin
   (A-1) "ECOTRAN N-200", product of Teijin Limited
[B] High molecular weight polytetrafluoroethylene resin
   (B-1) "POLYFLON M-12", product of Daikin Industries, Ltd.
   (B-2) "KT300M", product of Kitamura Limited
[C] Low molecular weight polytetrafluoroethylene resin
   (C-1) "DYNEON TF9207Z", product of 3M Company
   (C-2) "Fluon L169J", product of AGC Chemicals
[D] Ultra-high molecular weight polyethylene resin
   (D-1) "Modified LUBMER LY1040", product of Mitsui Chemicals, Inc.
   (D-2) "MIPELON XM-220", product of Mitsui Chemicals, Inc.
[E] Modified Polyolefin resin
   (E-1) Ethylene-based ionomer "HIMILAN 1855", product of DOW-MITSUI POLYCHEMICALS Co., Ltd.
   (E-2) Epoxy group containing polyolefin resin "BONDFAST E", product of Sumitomo Chemical Co., Ltd.
[F] Amorphous polymer
   (F-1) Polyethersulfone resin "SUMIKAEXCEL 4800G", product of Sumitomo Chemical Co., Ltd.
   (F-2) Polyphenylsulfone resin "CERAMER 60", product of CERAMER GMBH
[G] Phosphate
   (G-1) Calcium pyrophosphate (product of Yoneyama Chemical Industry)
   (G-2) Trilithium phosphate (product of Taihei Chemical Industrial Co., Ltd.)
[H] Sulfate
   (H-1) Barium sulfate "BMH-60", product of Sakai Chemical Industry Co., Ltd.
[I] Lubricant
   (I-1) Wax, "Licowax PED 191", product of Clariant Chemicals
[J] Pigment
   (J-1) Carbon black, "BP 4350", product of Cabot Corporation

### (Examples 1 to 15 and Comparative Examples 1 to 12)

Compositions were each obtained in the form of pellets by using the aforesaid materials as each component, mixing them according to the component composition shown in Table 1, Table 2, and Table 3 and melt-kneading the resulting mixture in a twin-screw extruder at 290°C. Then, the resulting pellets were molded into a test piece (a 30 mm long, 30 mm wide, and 3 mm thick rectangular plate) by an injection molding machine at a molding temperature of 300°C and a mold temperature of 140°C.

The sliding tests shown below were performed on the test pieces obtained as described above and a friction coefficient and a wear amount were measured and at the same time, bending strength and moldability were evaluated. The results are shown in Table 1, Table 2, and Table 3.

### (Evaluation)

### <Sliding Test 1>

Form of motion: Thrust one-way rotation
Contact pressure: 100 kgf/cm²
Sliding velocity: 1 m/min
Time: 20 hours
Counterpart: SUS304 (Ra: 0.15 (µm))
Lubrication condition: non-lubrication

### <Sliding Test 2>

Form of motion: Thrust one-way rotation
Contact pressure: 10 kgf/cm²
Sliding velocity: 30 m/min
Time: 20 hours
Counterpart: SUS304 (Ra: 0.15 (µm))
Lubrication conditions: non-lubrication

### <Sliding Test 3>

Form of motion: Thrust one-way rotation
Contact pressure: 100 kgf/cm²
Sliding velocity: 1 m/min
Time: 20 hours
Counterpart: SUS304 (Ra: 0.32 (µm))
Lubrication conditions: non-lubrication

### <Bending strength>

A bending test piece 80 mm long, 10 mm wide, and 4 mm thick was obtained by molding with an injection molding machine "SE-50DUZ", product of Sumitomo Heavy Industries, Ltd., at a resin temperature of 300°C and a mold temperature of 140°C. The bending strength of the resulting test piece was measured in accordance with JIS-K7171 under the following conditions: a distance between supports: 100 mm, a crosshead speed: 5 mm/min, a temperature: 23°C, and a relative humidity of 50%.

### <Moldability 1>

The pellets were molded into a molded product (sliding member) using an injection molding machine and the presence or absence of a burr of the resulting molded product was visually checked and evaluated.
Evaluation criteria ∘: good ×: bad

### <Moldability 2>

The pellets were molded into a molded product (sliding member) using an injection molding machine and the appearance state (burn marks or bubble due to gas and aggregation of an additive) of the resulting molded product was visually checked and evaluated.
Evaluation criteria ∘: good ×: bad

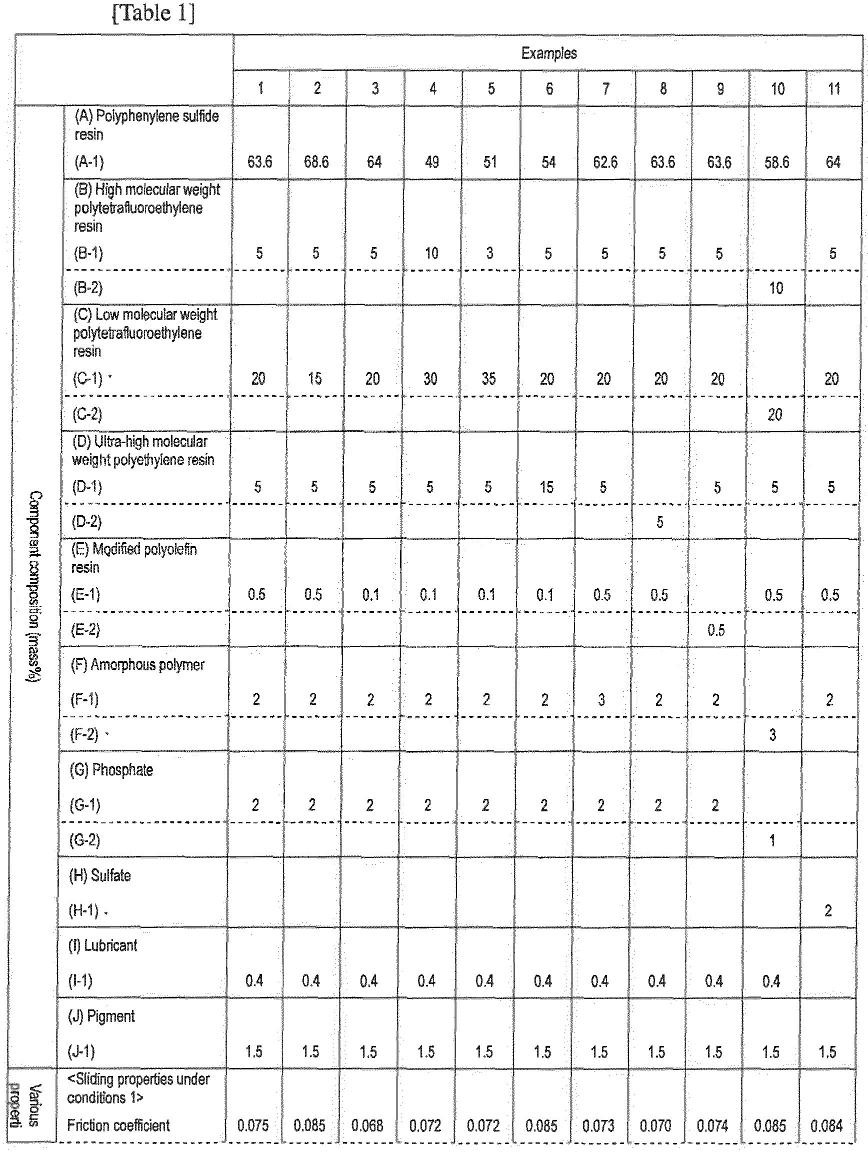

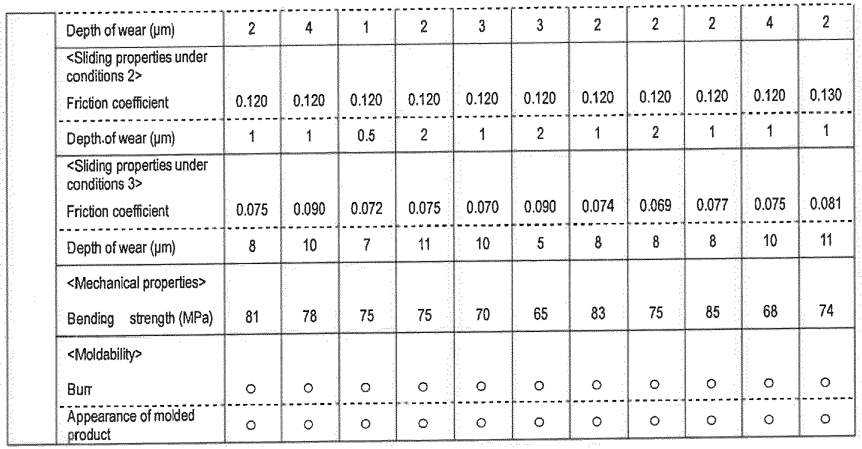

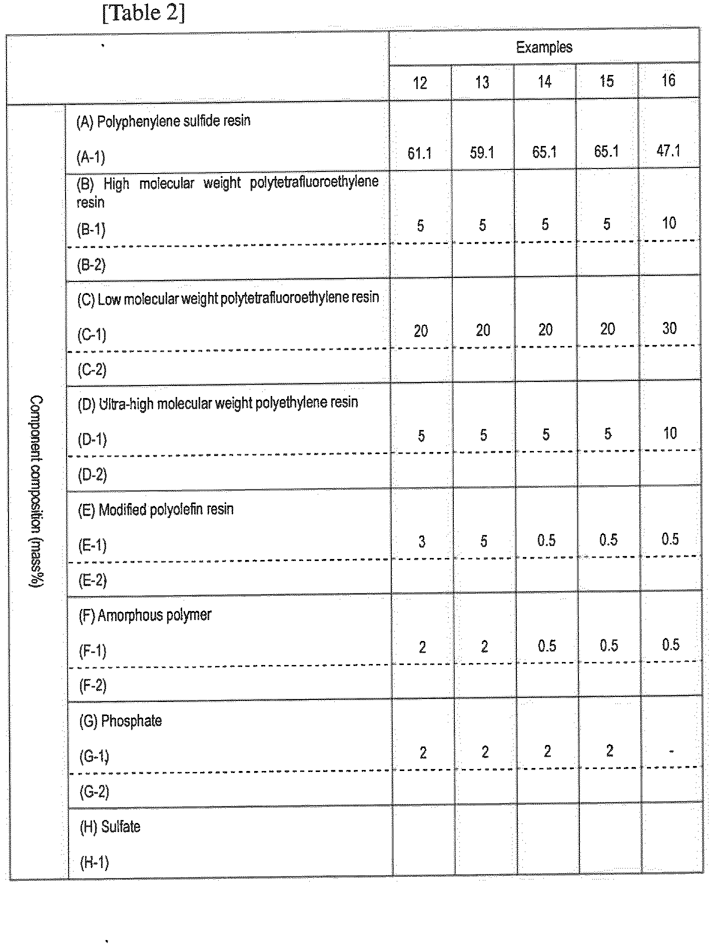

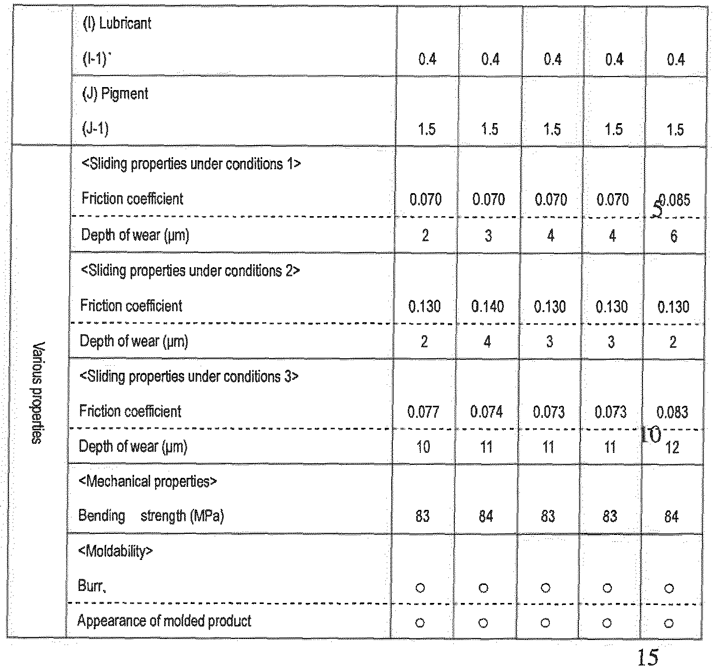

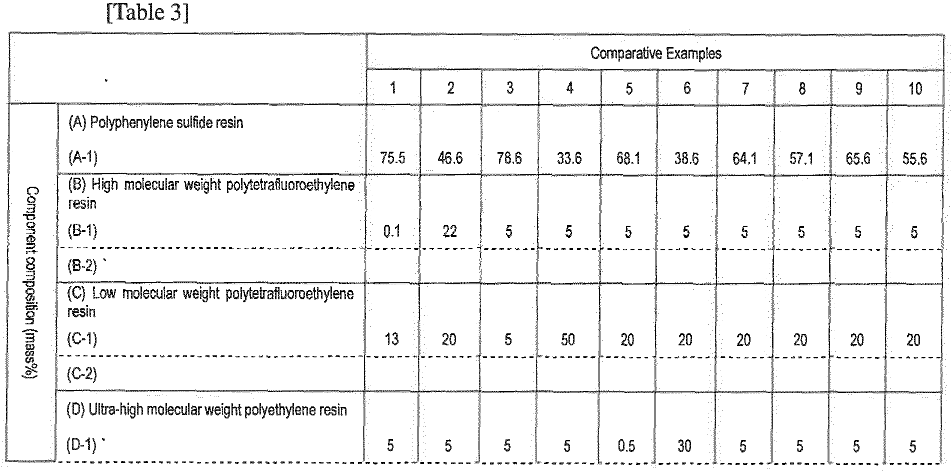

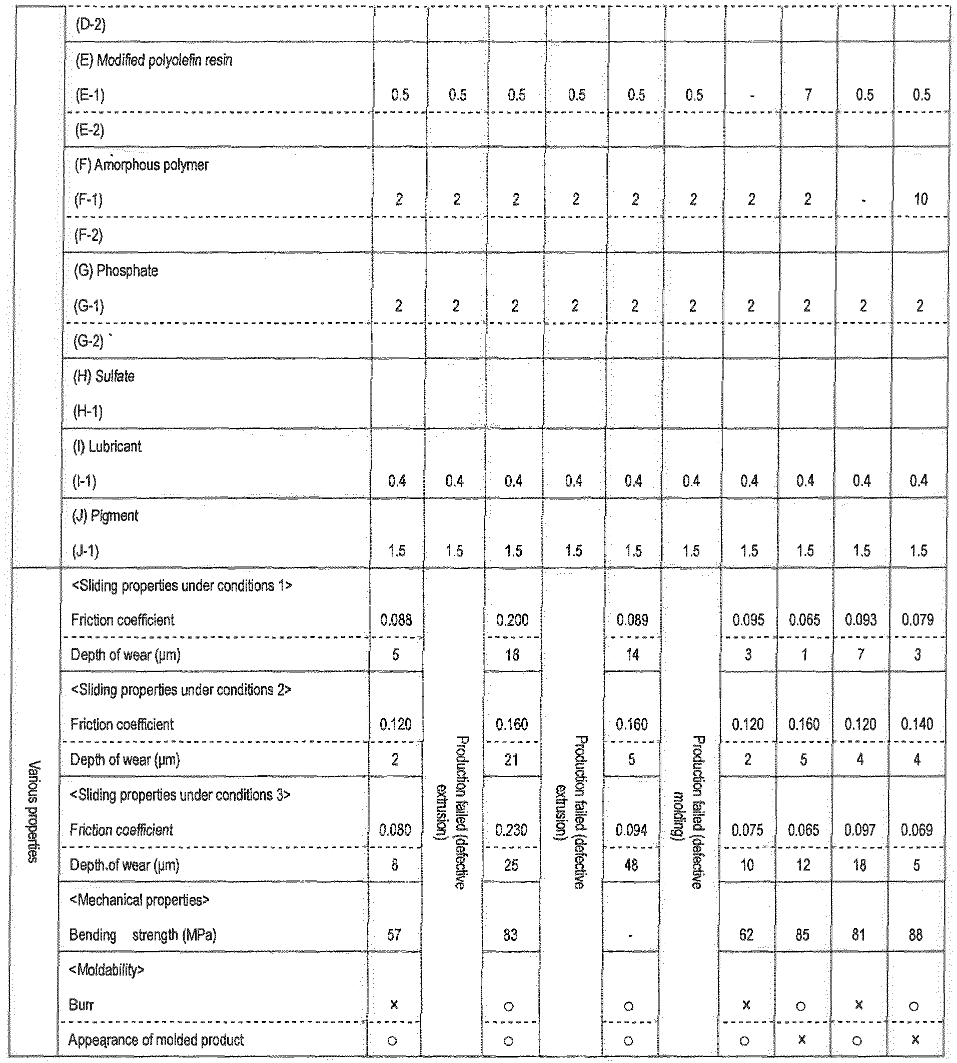

It is apparent from the aforesaid test results that in Examples 1 to 15 in which the amount of each component is in the range of the present invention, the molded product exhibits high sliding performance and also has high bending strength, and it does not have a problem such as burr generation or defective appearance.

In Comparative Example 1 in which the amount of the polytetrafluoroethylene resin is smaller than the range of the present invention and the amount of the high molecular weight polytetrafluoroethylene resin is smaller than the preferred range of the present invention, reinforcement and thickening which will otherwise be achieved by making the high molecular weight polytetrafluoroethylene resin fibrous are insufficient so that the molded product has low bending strength and defective molding such as burr generation occurs in the molded product. When the amount of the high molecular weight polytetrafluoroethylene resin is increased, high molecular weight polytetrafluoroethylene is made fibrous and the molded product thus obtained has improved bending strength, but in Comparative Example 2 in which the total amount of the polytetrafluoroethylene resins is more than the range of the present invention, extrudability worsens, leading to a failure in the production of a molded product.

In Comparative Example 3 in which the amount of the polytetrafluoroethylene resins is smaller than the range of the present invention and at the same time, the amount of the low molecular weight polytetrafluoroethylene resin is smaller than the preferred range of the present invention, the molded product does not have sufficient lubrication properties and it has a higher friction coefficient and a larger depth of wear than those of Examples. In Comparative Examples 2 and 4 in which the amount of the polytetrafluoroethylene resins is larger than the range of the present invention and at the same time, the amount of the low molecular weight polytetrafluoroethylene resin is larger than the preferred range of the present invention, shortage in the amount of the polyphenylene sulfide resin serving as a matrix leads to a problem such as failure in extrusion.

In Comparative Example 5 in which the amount of the ultra-high molecular weight polyethylene resin is smaller than the range of the present invention, the friction coefficient is higher and the depth of wear is larger than those of Examples. Particularly under the test conditions 3 in which sliding is performed with a counterpart having a rough surface, wear resistance is significantly reduced. This occurs because the ultra-high molecular weight polyethylene resin can speedily form a soft resin transfer film on the counterpart and planarize the surface of the counterpart during conforming thereto in the initial stage of sliding. It has been confirmed by the observation of the surface of the counterpart after the test under the test conditions 3 in Example 1 that the recess portion of the unevenness on the surface of the counterpart is filled with the soft resin transfer film of the ultra-high molecular weight polyethylene resin and the surface of the counterpart is planarized. In Comparative Example 6 in which the amount of the ultra-high molecular weight polyethylene resin is larger than the range of the present invention, ultra-high molecular weight polyethylene is thermally deteriorated and due to a deterioration gas thus generated, a molded product has a burn mark, leading to defective molding. In addition, contamination of the mold with the gas component causes a problem.

In Comparative Example 7 containing no modified polyolefin resin, the molded product has reduced sliding performance and bending strength and due to defective molding, the molded product has burr thereon. The modified polyolefin resin thermally degrades at a molding temperature of a polyphenylene sulfide resin so that when it is added in excess, burn marks appear on the molded product and worsen the appearance thereof. Accordingly, in Comparative Example 8 in which the amount of the modified polyolefin resin is larger than the range of the present invention, the molded product has reduced sliding performance and at the same time, has a defective appearance.

In Comparative Example 9 containing no amorphous polymer, the molded product has reduced wear resistance and has burr. When the amorphous polymer is added, the resulting molded product has improved wear resistance. In Comparative Example 10 in which the amount of the amorphous polymer is larger than the range of the present invention, however, the molded product has increased surface roughness and as a result, has a defective appearance.

In Comparative Example 7 containing no modified polyolefin resin and Comparative Example 9 containing no amorphous polymer, the molded product has a burr , revealing that single addition of them cannot suppress it from having a burr. In order to have an effect of suppressing burr generation, use of the modified polyolefin resin and the amorphous polymer in combination is effective.

## Claims

1. A resin composition for sliding member, comprising 40 to 80 mass% of a polyphenylene sulfide resin and, as additives, 15 to 40 mass% of a polytetrafluoroethylene resin, 2 to 20 mass% of an ultra-high molecular weight polyethylene resin, 0.1 to 5 mass% of a modified polyolefin resin, and 0.5 to 5 mass% of an amorphous polymer.

2. The resin composition for sliding member according to Claim 1, wherein the polytetrafluoroethylene resin has 1 to 10 mass% of a high molecular weight polytetrafluoroethylene resin and 10 to 35 mass% of a low molecular weight polytetrafluoroethylene resin.

3. The resin composition for sliding member according to Claim 1 or 2, wherein the modified polyolefin resin is selected from ethylene-based ionomers, polyolefin resins having, in the molecule thereof, an epoxy group, and polyolefin resins graft-modified with an unsaturated carboxylic acid or an anhydride thereof, or a derivative thereof.

4. The resin composition for sliding member according to Claim 3, wherein the polyolefin resin graft-modified with an unsaturated carboxylic acid or an anhydride thereof, or a derivative thereof is selected from polyethylene resins modified with maleic anhydride, polypropylene resins modified with maleic anhydride, ethylene-α-olefin copolymers modified with maleic anhydride, and styrene-ethylene/butylene-styrene copolymers modified with maleic anhydride.

5. The resin composition for sliding member according to any one of Claims 1 to 4, wherein the amorphous polymer is selected from polysulfone-based resins, polyetherimide resins, and polyphenylene ether resins.

6. The resin composition for sliding member according to Claim 5, wherein the polysulfone-based resin is selected from polyethersulfone resins, polysulfone resins, and polyphenylsulfone resins.

7. The resin composition for sliding member according to any one of Claims 1 to 6, further comprising, as an additional component, 0.1 to 10 mass% of at least one selected from phosphates, carbonates, and sulfates.

8. The resin composition for sliding member according to Claim 7, wherein the phosphates, carbonates, or sulfates are salts of an alkali metal or alkaline earth metal.

9. A sliding member comprising the resin composition for sliding member as claimed in any one of Claims 1 to 8.

## Patentansprüche

1. Harzzusammensetzung für ein Gleitelement, umfassend 40 bis 80 Masse-% eines Polyphenylensulfidharzes und, als Additive, 15 bis 40 Masse-% eines Polytetrafluorethylenharzes, 2 bis 20 Masse-% eines Polyethylenharzes mit ultrahohem Molekulargewicht, 0,1 bis 5 Masse-% eines modifizierten Polyolefinharzes und 0,5 bis 5 Masse-% eines amorphen Polymers.

2. Harzzusammensetzung für ein Gleitelement nach Anspruch 1, wobei das Polytetrafluorethylenharz 1 bis 10 Masse-% eines Polytetrafluorethylenharzes mit hohem Molekulargewicht und 10 bis 35 Masse-% eines Polytetrafluorethylenharzes mit niedrigem Molekulargewicht aufweist.

3. Harzzusammensetzung für ein Gleitelement nach Anspruch 1 oder 2, wobei das modifizierte Polyolefinharz ausgewählt ist aus Ionomeren auf Ethylenbasis, Polyolefinharzen, die in ihrem Molekül eine Epoxygruppe aufweisen, und Polyolefinharzen, die pfropfmodifiziert sind mit einer ungesättigten Carbonsäure oder einem Anhydrid davon oder einem Derivat davon.

4. Harzzusammensetzung für ein Gleitelement nach Anspruch 3, wobei das Polyolefinharz, das mit einer ungesättigten Carbonsäure oder einem Anhydrid davon oder einem Derivat davon pfropfmodifiziert ist, ausgewählt ist aus Polyethylenharzen, die mit Maleinsäureanhydrid modifiziert sind, Polypropylenharzen, die mit Maleinsäureanhydrid modifiziert sind, Ethylen-α-Olefin-Copolymeren, die mit Maleinsäureanhydrid modifiziert sind, und Styrol-Ethylen/Butylen-Styrol-Copolymeren, die mit Maleinsäureanhydrid modifiziert sind.

5. Harzzusammensetzung für ein Gleitelement nach einem der Ansprüche 1 bis 4, wobei das amorphe Polymer ausgewählt ist aus Harzen auf Polysulfonbasis, Polyetherimidharzen und Polyphenylenetherharzen.

6. Harzzusammensetzung für ein Gleitelement nach Anspruch 5, wobei das Harz auf Polysulfonbasis ausgewählt ist aus Polyethersulfonharzen, Polysulfonharzen und Polyphenylsulfonharzen.

7. Harzzusammensetzung für ein Gleitelement nach einem der Ansprüche 1 bis 6, ferner umfassend als eine zusätzliche Komponente 0,1 bis 10 Masse-% mindestens eines Stoffs, ausgewählt aus Phosphaten, Carbonaten und Sulfaten.

8. Harzzusammensetzung für ein Gleitelement nach Anspruch 7, wobei die Phosphate, Carbonate oder Sulfate Salze eines Alkali- oder Erdalkalimetalls sind.

9. Gleitelement, umfassend die Harzzusammensetzung für ein Gleitelement nach einem der Ansprüche 1 bis 8.

## Revendications

1. Une composition de résine pour élément glissant, comprenant de 40 à 80 % en masse d'une résine de sulfure de polyphénylène et, comme additifs, de 15 à 40 % en masse d'une résine de polytétrafluoroéthylène, de 2 à 20 % en masse d'une résine de polyéthylène à ultra-haut poids moléculaire, de 0,1 à 5 % en masse d'une résine polyoléfine modifiée, et de 0,5 à 5 % en masse d'un polymère amorphe.

2. La composition de résine pour élément glissant selon la revendication 1, dans laquelle la résine de polytétrafluoroéthylène comprend de 1 à 10 % en masse d'une résine de polytétrafluoroéthylène à haut poids moléculaire, et de 10 à 35 % en masse d'une résine de polytétrafluoroéthylène de faible poids moléculaire.

3. La composition de résine pour élément glissant selon la revendication 1 ou 2, dans laquelle la résine de polyoléfine modifiée est sélectionnée parmi les ionomères à base d'éthylène, les résines de polyoléfine ayant, dans leur molécule, un groupe époxy, et les résines de polyoléfine modifiées par greffage avec un acide carboxylique insaturé ou un anhydride de celui-ci, ou un dérivé de celui-ci.

4. La composition de résine pour élément glissant selon la revendication 3, dans laquelle la résine de polyoléfine modifiée par greffage avec un acide carboxylique insaturé ou un anhydride de celui-ci, ou un dérivé de celui-ci, est sélectionnée parmi les résines de polyéthylène modifiées avec de l'anhydride maléique, les résines de polypropylène modifiées avec de l'anhydride maléique, les copolymères éthylène-α-oléfine modifiés avec de l'anhydride maléique, et des copolymères styrène-éthylène/butylène-styrène modifiés avec de l'anhydride maléique.

5. La composition de résine pour élément glissant selon l'une quelconque des revendications 1 à 4, dans laquelle le polymère amorphe est sélectionné parmi les résines à base de polysulfone, les résines de polyétherimide et les résines de poly(éther de phénylène).

6. La composition de résine pour élément glissant selon la revendication 5, dans laquelle la résine à base de polysulfone est sélectionnée parmi les résines de polyéthersulfone, les résines de polysulfone et les résines de polyphénylsulfone.

7. La composition de résine pour élément glissant selon l'une quelconque des revendications 1 à 6, comprenant en outre, en tant que composant supplémentaire, de 0,1 à 10 % en masse d'au moins un composé sélectionné parmi les phosphates, les carbonates et les sulfates.

8. La composition de résine pour élément glissant selon la revendication 7, dans laquelle les phosphates, les carbonates ou les sulfates sont des sels d'un métal alcalin ou d'un métal alcalino-terreux.

9. Un élément glissant comprenant la composition de résine pour élément coulissant selon l'une quelconque des revendications 1 à 8.
